# NOUVEAU FASCICULE DE BREVET EUROPEEN

(11) **EP 1 698 497 B2**
(45) Date de publication et mention de la décision concernant l'opposition: **10.04.2019**
(45) Mention de la délivrance du brevet: 16.12.2009
(21) Numéro de dépôt: 06290336.4
(22) Date de dépôt: 28.02.2006
(51) Int. Cl.: B66F 9/075, B60G 9/02, B60G 17/005

(54) **Dispositif de contrôle du basculement pour chariot élévateur**
Neigungssteuergerät für Gabelhübwagen
Tilt control device for forklift

(30) Priorité: 02.03.2005 FR 0502106
(43) Date de publication de la demande: 06.09.2006
(73) Titulaire: MANITOU BF, 44150 Ancenis (FR)
(72) Inventeur: Braud, Marcel-Claude, 44150 Saint Herblon (FR)
(74) Mandataire: Godineau, Valérie

(56) Documents cités:
- EP-A- 0 921 095
- EP-A1- 0 891 883
- DE-A1- 10 017 358
- DE-A1- 10 154 805
- GB-A- 2 264 689
- US-A- 5 639 119
- US-A- 5 639 119
- US-A- 5 813 697
- US-A1- 2002 093 153

## Description

L'invention est relative à un dispositif de commande pour chariot comportant un pont oscillant.

Les documents US 5 639 119 et US 5 813 697 décrivent des appareils stabilisants pour des châssis de chariots à bras télescopique. Ces appareils stabilisants comportent des vérins à simple effet en appui aux deux extrémités du pont arrière oscillant du chariot, mais ne permettent pas de réagir contre un déclenchement de perte de stabilité du chariot à bras télescopique. Ces appareils stabilisants définissent en effet trois modes opératoires du pont arrière : un premier mode dans lequel le pont arrière oscille librement, un deuxième mode dans lequel les mouvements oscillants du pont arrière sont freinés par un étranglement hydraulique et un troisième mode dans lequel le pont arrière est bloqué et ne peut pas osciller.

Le document EP 0 921 095 expose un chariot comprenant un blocage de la rotation du pont oscillant pour améliorer la stabilité.

Un premier but de l'invention est de perfectionner l'état de la technique connue, en fournissant un nouveau dispositif de commande permettant de réagir contre une perte de stabilité latérale.

Un deuxième but de l'invention est de remédier aux inconvénients de la technique connue, en fournissant un nouveau dispositif de commande tenant compte de l'état dynamique instantané du chariot à bras télescopique auquel le dispositif est destiné.

L'invention a pour objet un chariot à pont oscillant, selon la revendication 1.

Selon d'autres caractéristiques de l'invention :
- le dispositif peut comporter deux vérins agissant sur le pont oscillant, pour permettre l'adjonction de fonctions supplémentaires au pont oscillant.

L'invention sera mieux comprise, grâce à la description qui va suivre donnée à titre d'exemple non limitatif en référence aux dessins annexés dans lesquels :
- La figure 1 représente schématiquement, une vue en perspective d'un chariot à pont oscillant selon l'invention.
- La figure 2 représente schématiquement, une vue en perspective illustrant la variation de stabilité latérale d'un chariot à pont oscillant de l'état de la technique.
- La figure 3 représente schématiquement, un diagramme de fonctionnement de dispositif selon l'invention.
- La figure 4 représente schématiquement, une vue partielle d'un premier mode de réalisation de dispositif selon l'invention.
- La figure 5 représente schématiquement, une vue partielle d'un mode de réalisation de dispositif non conforme à l'invention.
- La figure 6 représente schématiquement, une vue en perspective illustrant la réaction contre une réduction de stabilité latérale d'un chariot à pont oscillant selon l'invention.
- La figure 7 représente schématiquement, une vue partielle d'un mode de réalisation de dispositif non conforme à l'invention.

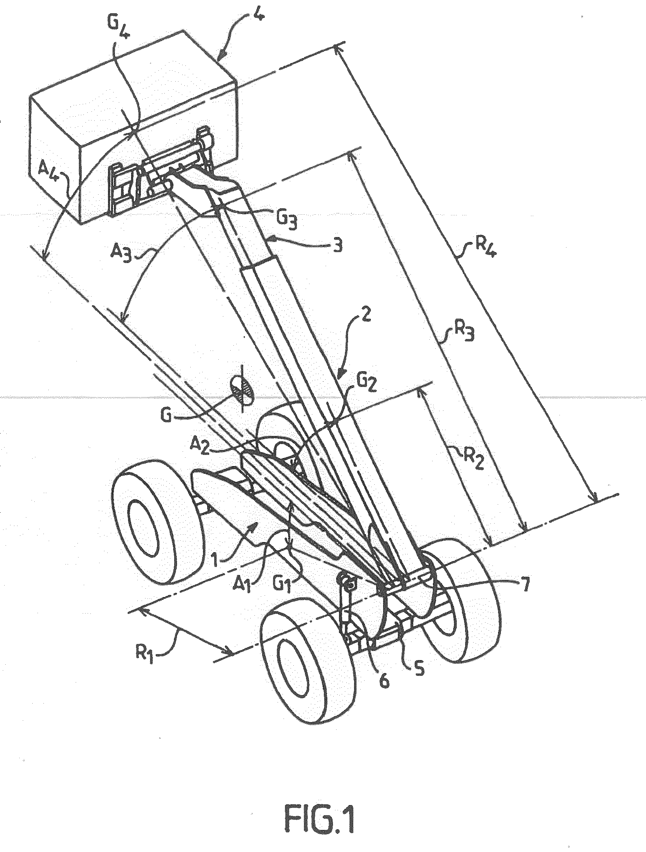

En référence aux figures 1 à 7, les éléments identiques ou fonctionnellement équivalents sont repérés par des chiffres de référence identiques.

Sur la figure 1, un chariot à pont oscillant selon l'invention comporte un châssis 1 automoteur comportant un pont avant non oscillant et un pont arrière oscillant, une section fixe 2 de bras télescopique, une section coulissante 3 de bras télescopique et un chargement 4 comprenant un accessoire solidaire de la section coulissante 3 de bras télescopique et une charge portée par ledit accessoire.

Le pont arrière du châssis oscille autour d'un axe 5 sous commande d'au moins un vérin 6 à double effet.

L'ensemble de châssis 1 automoteur portant tous ses équipements et incluant ses ponts avant et arrière possède un centre de gravité G₁ situé à une distance R1 selon un angle A1 d'inclinaison par rapport au plan horizontal passant par l'axe 7 du pivot d'articulation du bras télescopique sur le châssis 1.

Des moyens ou capteurs de type connu en soi sont avantageusement prévus pour déterminer continûment les paramètres suivants :
- distance R₂ et angle A₂ d'inclinaison sur l'horizontale du centre de gravité G₂ de la section fixe 2 de bras télescopique ;
- distance R₃ et angle A₃ d'inclinaison sur l'horizontale du centre de gravité G₃ de la section coulissante 3 de bras télescopique ;
- distance R₄ et angle A₄ d'inclinaison sur l'horizontale du centre de gravité G₄ du chargement 4 incluant l'accessoire du bras télescopique.

A partir des valeurs ou paramètres précités continûment mesurés, on calcule continûment une indication de la position instantanée du centre de gravité G du chariot à bras télescopique.

D'autres moyens de type connu sont prévus pour déterminer continûment les paramètres suivants :
- les angles d'inclinaison du châssis 1 par rapport à l'horizontale ;
- le rayon de braquage du chariot à bras télescopique ;
- la vitesse d'avancement du chariot à bras télescopique.

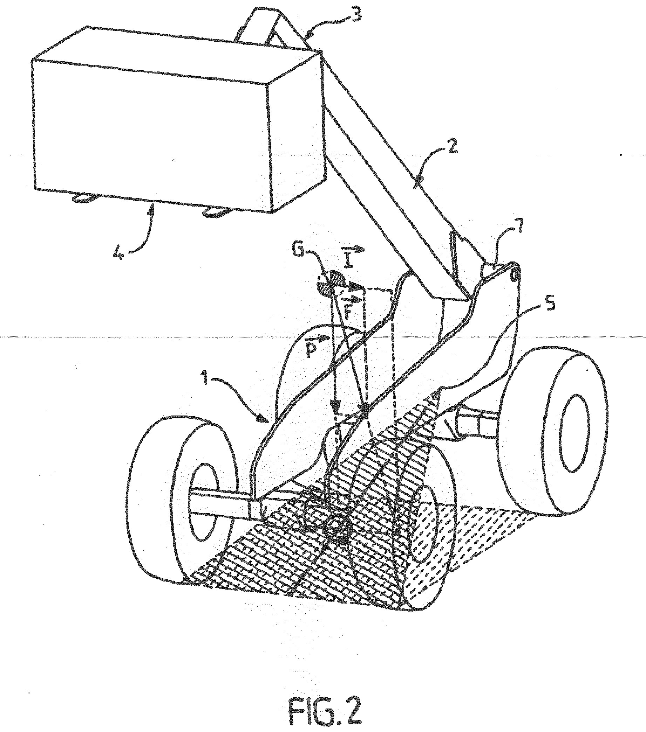

Sur la figure 2, un chariot à bras télescopique de type connu en soi est représenté avec son centre de gravité G, auquel s'applique la force F résultante de la composante P du poids perpendiculaire au châssis 1 et d'une force I latérale.

Lorsque le chariot est en mouvement sur un sol horizontal, la force I latérale est une force latérale d'inertie engendrée par la vitesse de déplacement et le braquage des roues du chariot à bras télescopique.

Lorsque le chariot est en position inclinée, la force 1 latérale est déterminée à partir de la composante transversale du poids parallèle à la direction d'inclinaison transversale du châssis 1, et de la force 1 latérale d'inertie si le chariot est en mouvement.

Lorsque le pont arrière peut osciller librement, la stabilité latérale du chariot dépend de la valeur du couple de stabilité latérale de la force F par rapport au côté correspondant du triangle de sustentation défini par les contacts au sol des roues avant et l'axe 5 d'oscillation du pont arrière sur le châssis 1.

Lorsque le pont arrière est bloqué et ne peut pas osciller, la stabilité latérale du chariot dépend de la valeur du couple de stabilité latérale de la force F par rapport au côté correspondant du quadrilatère de sustentation défini par les contacts au sol des roues avant et des roues arrière.

L'invention permet notamment d'améliorer activement la stabilité latérale du chariot en appliquant un couple réactif entre le châssis 1 et le pont arrière oscillant grâce à l'actionnement d'un vérin 6 à double effet, tout en conservant une oscillation nécessaire au maintien des roues arrière au sol pendant le déplacement du chariot à bras télescopique.

L'invention permet ainsi de remédier aux inconvénients du blocage du pont oscillant d'un chariot en déplacement tout terrain, lequel risque sur sol inégal de se retrouver en appui sur seulement trois roues et de se renverser.

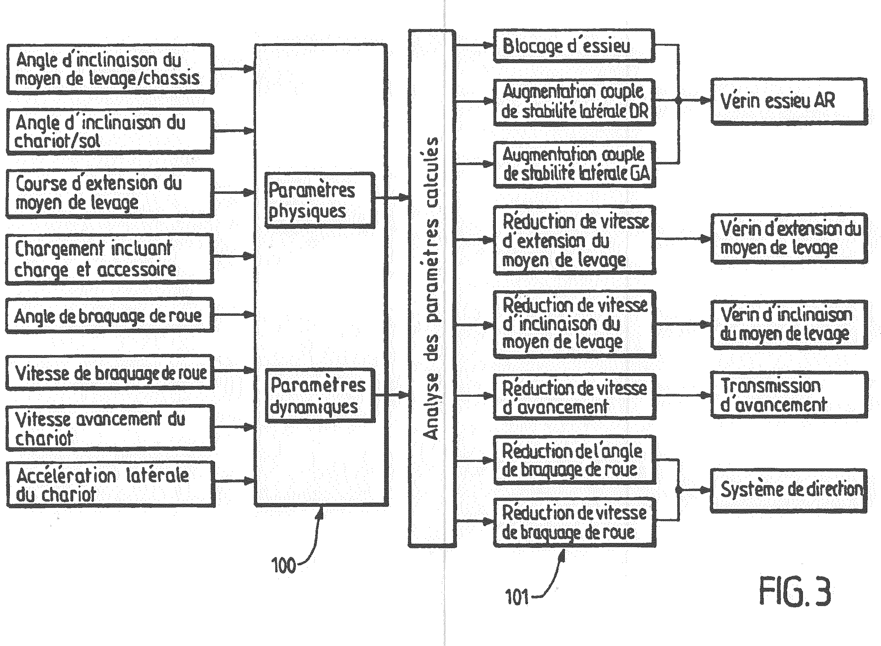

Sur la figure 3, un dispositif selon l'invention comporte un ensemble de capteurs des valeurs physiques suivantes déterminant une indication de la position instantanée du centre de gravité G du chariot :
- angle d'inclinaison de la flèche par rapport au châssis;
- angles d'inclinaison du chariot à bras télescopique par rapport au sol
- Course de télescopage ;
- chargement en bout de bras télescopique incluant la charge et l'accessoire ;

Le dispositif selon l'invention comporte également un ensemble de capteurs des valeurs dynamiques suivantes :
- angles de braquage de roue ;
- vitesses de braquage de roue ;
- vitesse d'avancement du chariot ;
- accélération latérale du chariot.

A partir des valeurs transmises par les capteurs, un paramètre physique relatif au centre de gravité G et un paramètre dynamique relatif aux forces appliquées au centre de gravité G sont fournis par une interface 100 de traitement et de calcul.

Un module de contrôle 101 comporte un programme d'analyse et au moins un sous-programme choisi dans l'ensemble des sous-programmes suivants destinés à améliorer la stabilité latérale d'un chariot à bras télescopique en agissant sur les propriétés suivantes :
- blocage de l'essieu arrière ;
- amélioration du couple de stabilité latérale droite ;
- amélioration du couple de stabilité latérale gauche ;
- réduction de vitesse de télescopage ;
- réduction de vitesse de levage ;
- réduction de vitesse d'avancement du chariot.
- limitation d'angle et/ou de vitesse de braquage ;

Le module 101 de contrôle agit sur les actionneurs ou organes suivants du chariot :
- au moins un vérin 6 à double effet de commande du pont oscillant arrière ;
- un vérin de télescopage ;
- un vérin de levage ;
- une transmission d'avancement ;
- un système de direction ;
indépendamment ou simultanément, au moyen de commandes appropriées, de type connu en soi en ce qui concerne le vérin de télescopage, le vérin de levage et la transmission d'avancement et le système de direction.

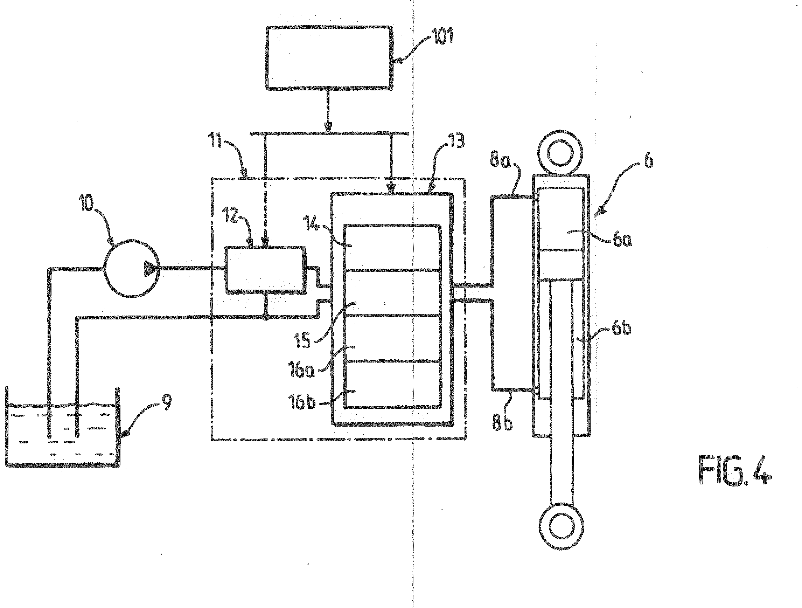

Sur la figure 4, un premier dispositif selon l'invention comporte au moins un vérin 6 de commande de pont arrière avec une première chambre 6a et une deuxième chambre 6b alimentées respectivement par une ligne 8a et une ligne 8b.

Un module 11 de contrôle est relié à une pompe ou source 10 de pression et à un réservoir 9 de fluide hydraulique, afin d'alimenter les lignes 8a et 8b connectées aux chambres 6a et 6b du vérin 6.

Le module 11 de contrôle est relié au calculateur 101 pour sélectionner une valeur de pression à réguler par un bloc 12 de régulation de pression et pour sélectionner l'opération d'un distributeur faisant partie du bloc 13.

Le bloc 13 de distribution comprend un distributeur 14 de blocage du vérin 6, un distributeur 15 de libre oscillation du vérin, un distributeur 16a de mise sous pression de la première chambre 6a et un distributeur 16b de mise sous pression de la deuxième chambre 6b.

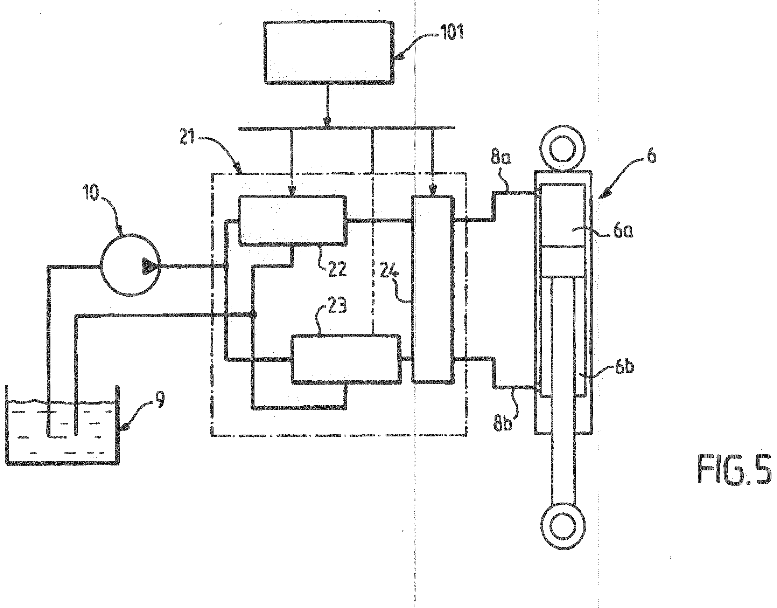

Sur la figure 5, un dispositif non conforme à l'invention comporte au moins un vérin 6 de commande de pont arrière avec une première chambre 6a et une deuxième chambre 6b alimentées respectivement par une ligne 8a et une ligne 8b.

Un module 21 de contrôle est relié à une pompe ou source 10 de pression et à un réservoir 9 de fluide hydraulique, afin d'alimenter les lignes 8a et 8b connectées aux chambres 6a et 6b du vérin 6

Le module 21 de contrôle est relié au calculateur 101 pour sélectionner une valeur de première pression à réguler par un bloc 22 de régulation de première pression et une valeur de deuxième pression à réguler par un bloc 23 de régulation de deuxième pression, et pour opérer ou non un organe 24 de blocage, en fonction de la condition de stabilité du chariot à bras télescopique.

La première pression de fluide hydraulique régulée par le bloc 22 est destinée à la mise sous pression de la première chambre 6a, et la deuxième pression du fluide hydraulique régulée par le bloc 23 est destinée à la mise sous pression de la deuxième chambre 6b.

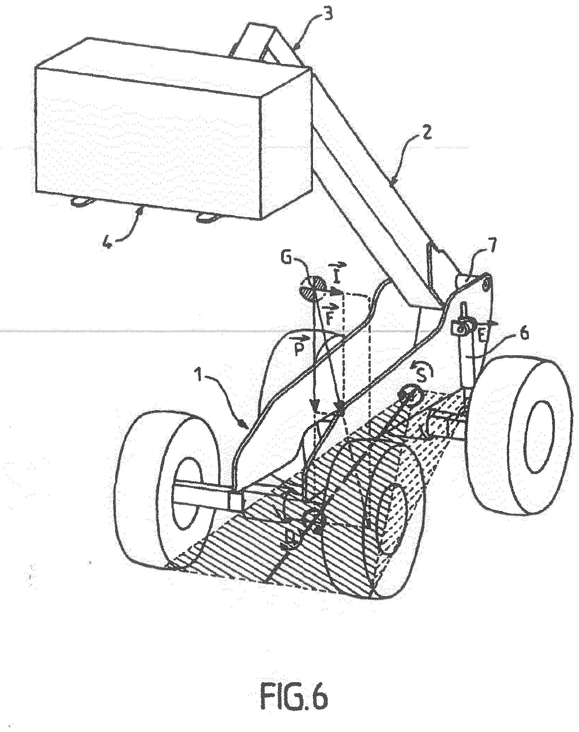

Sur la figure 6, un chariot à pont oscillant selon l'invention comporte un pont avant rigidement fixé au châssis 1 et un pont arrière oscillant commandé par au moins un vérin 6 à double effet.

En fonction de la variation de stabilité latérale instantanée du chariot, un effort E est exercé par le vérin 6 pour exercer un couple résistant entre le pont arrière et le châssis 1, afin d'exercer un couple stabilisant S au niveau de l'axe 5 d'oscillation du pont arrière.

L'effet du couple stabilisant S est de s'opposer activement au couple de déséquilibre D créé par la force F résultante appliquée au centre instantané G de gravité du chariot à bras télescopique.

Le couple de déséquilibre D peut être défini comme la différence entre les valeurs de stabilité latérale droite et de stabilité latérale gauche, ou alternativement comme le moment de la force F par rapport à la médiane du triangle de sustentation passant par l'axe 5 d'oscillation et par le milieu de l'empattement du pont avant défini par le milieu des contacts au sol des roues avant.

L'effet du couple stabilisant S est de compenser l'effet de la force 1 latérale et ainsi de rapprocher la force F du plan défini par le centre G de gravité du chariot et la médiane du triangle de sustentation, de manière à rééquilibrer la stabilité latérale droite et la stabilité latérale gauche.

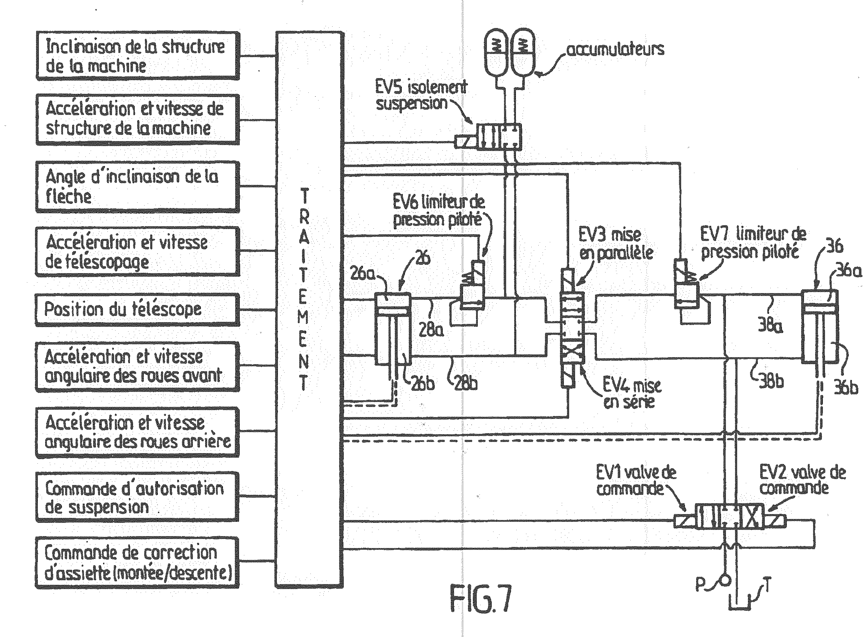

Sur la figure 7, un dispositif non conforme à l'invention comporte deux vérins 26 et 36 à double effet de commande de pont arrière.

Le vérin 26 à double effet comporte une première chambre 26a et une deuxième chambre 26b alimentées respectivement par une ligne 28a et une ligne 28b.

Le vérin 36 à double effet comporte une première chambre 36a et une deuxième chambre 36b alimentées respectivement par une ligne 38a et une ligne 38b.

Le dispositif non conforme à l'invention assure le pilotage du comportement des deux vérins hydrauliques 26 et 36 assurant des fonctions de suspension et d'oscillation au niveau de l'essieu arrière d'un véhicule

Des fonctions hydrauliques supplémentaires pour le déplacement sur route telles que suspension oléopneumatique, réglage en hauteur ou relevage du pont arrière, peuvent être ajoutées au moyen d'un outil logiciel permettant un ajustement aisé de différents paramètres ou lois de commande internes, via différents actionneurs hydrauliques, et en fonction des états des entrées du système et/ou: de lois de commande adaptées.

Le dispositif non conforme à l'invention comporte des entrées digitales, et des entrées analogiques.

Les entrées analogiques comportent les entrées suivantes :
- Inclinaisons de structure de la machine (Inclinaison de la structure de la machine suivant X, Inclinaison de la structure de la machine suivant Y / Inclinomètre deux axes)
- Dynamique de structure de la machine (Accélération et Vitesse de structure de la machine suivant X, Accélération et Vitesse de structure de la machine suivant Y, Accélération et Vitesse de structure de la machine suivant Z /Accéléromètre trois axes)
- Dynamique de la charge (Angle d'inclinaison de la flèche/Capteur angulaire, Accélération et Vitesse de télescopage /Accéléromètre un axe ; Position du télescope / Capteur de position (position rentrée suffisante ?) ; Roues directrices machine (Accélération et Vitesse angulaire des roues avant / Accéléromètre ; Accélération et Vitesse angulaire des roues arrière / Accéléromètre)
- Instrumentation des vérins (Pression de fond de vérin 26 / Capteur de pression ; Pression de tige de vérin 26 / Capteur de pression ; Pression de fond de vérin 36 / Capteur de pression ; Pression de tige de vérin 36 / Capteur de pression ; Course L26 du vérin 26/Capteur de position ; Course L36 du vérin 36/Capteur de position)

Les entrées digitales comportent les entrées suivantes :
- Commandes par l'utilisateur (Commande d'autorisation de suspension /interrupteur; Commande de correction d'assiette (montée), Commande de correction d'assiette (descente) / Basculeur trois états sans maintien)

Le dispositif non conforme à l'invention comporte des sorties tout ou rien, et des sorties proportionnelles.

Les sorties tout ou rien comportent les sorties suivantes :
- Interface hydraulique vérins (Mise en parallèle EV3 des vérins 26 et 36 à double effet ; Mise en série EV4 des vérins 26 et 36 à double effet / Electrovanne à deux têtes de commande)
- Isolement de la suspension (Isolement EV5 des accumulateurs de suspension / Electrovanne)

Les sorties proportionnelles comportent les sorties suivantes :
- Commande de régulation (Valve EV1 de commande proportionnelle ; Valve EV2 de commande proportionnelle ; Electrovanne à deux têtes de commande)
- Limiteurs de pression (Ajustement de la consigne du limiteur de pression de fond de vérin 26 / Limiteur EV6 de pression piloté ; Ajustement de la consigne du limiteur de pression de fond de vérin 36 / Limiteur EV7 de pression piloté)

Le dispositif non conforme à l'invention comporte un logiciel d'application pour gérer l'acquisition en temps réel des différentes entrées et signaux des capteurs, et piloter les actionneurs hydrauliques.

L'ensemble des couches basses du logiciel d'application est implémenté en dur, mais la partie applicative peut être modifiée via une interface grâce à l'utilisation d'un outil logiciel de synthèse de code à partir d'une description fonctionnelle.

Une phase d'initialisation (F00 : « initialisation ») doit permettre de remplir les chambres de vérins si les pressions hydrauliques sont trop faibles, notamment lorsque l'arrière de la machine est en position trop basse pour travailler.

Une autre phase d'initialisation (F00 : « initialisation ») avec modification des lois de commande doit permettre de remplir les chambres de vérins si les pressions hydrauliques sont trop fortes, notamment lorsque l'arrière de la machine est en position trop haute pour travailler

Si la machine n'est pas en limite de stabilité frontale, le système remet la machine en position médiane. Si la machine est latéralement en pente, la fonction stabilité latérale (voir plus loin : F3 mode « stabilité latérale ») compense les pressions hydrauliques qui deviennent différentes. Il faut translater les courses des vérins d'une même différence pour conserver la même différence de pression.

Les cinq fonctions principales assurées après initialisation par le dispositif non conforme à l'invention sont les suivantes :
- F0 mode « oscillation » L'essieu est rendu oscillant mais non suspendu
- F1 mode « suspension » L'essieu est toujours oscillant mais suspendu
- F2 mode « stabilité frontale » Assure le contrôle permanent de la stabilité longitudinale de la machine.
- F3 mode « stabilité latérale » Assure le contrôle permanent de la stabilité latérale de la machine
- F4 mode « correction d'assiette » Permet la correction d'assiette dans l'axe longitudinal de la machine

F0 et F1 sont des modes de fonctionnement du système, alors que F2 et F3 sont des modes de contrôle assurés en permanence, qui n'interfèrent avec les modes de fonctionnement F0 et F1 que si une action sur les actionneurs s'avère nécessaire.
- Le mode F1 est le mode de fonctionnement « normal », à privilégier pour l'utilisateur, qui peut être le mode d'entrée du système après la phase d'initialisation. Le circuit hydraulique est en boucle fermée (EV1=0, EV2=0), les vérins sont en parallèle (EV3=1), et les accumulateurs sont en service (EV5=1). L'oscillation de l'essieu est libre, et le mouvement vertical avec fonction ressort amortisseur contre accumulateurs est possible.

Une fois en mode F1, le système bascule automatiquement en mode F0 si l'angle de flèche devient supérieur à un seuil critique ou si la sortie du télescope devient supérieure à un seuil critique.

Un bouton de commande de type basculeur permet la fonction d' « autorisation de suspension » par l'utilisateur, suite à quoi la suspension peut être activée ou non par le système : la visualisation de l'état effectivement activé de la suspension informe l'utilisateur de cet état.

L'actionneur EV4 peut être sollicité pour réaliser une fonction de suspension (EV5=1) avec rigidité sur l'essieu arrière (barre de torsion). Cette dernière configuration donne un avantage de confort à la conduite à grande vitesse sur route.

Le mode F1 et la fonction de suspension peuvent inversement être désactivés par l'utilisateur.
- Le mode F0 est identique au mode F1, mais sans la suspension : les accumulateurs sont isolés du circuit (EV5=0).

Après la phase d'initialisation, le système peut passer prioritairement en mode F1 si la hauteur de l'axe du pont est entre deux limites haute et basse, si les pressions de vérins sont entre deux limites haute et basse, si l'angle de flèche est inférieur à un seuil critique, et si la sortie du télescope est inférieure à un seuil critique.

Sinon, le système reste en mode F0
- Le mode F4 « correction d'assiette » et la fonction de correction d'assiette sont activés manuellement par l'utilisateur, et permet ou bien la descente, ou bien la montée (relevage), de la partie arrière de la machine.

La commande de descente de la machine par rapport au pont peut se faire jusqu'à une valeur minimale fonction des courses L26 et L36. Dans ce cas, EV2 est pilotée avec un débit défini (EV2=%), les vérins 26 et 36 sont mis en parallèle (EV3=1) et la suspension est verrouillée (EV5=0).

La commande de montée de la machine par rapport au pont peut se faire jusqu'à une valeur maximale fonction des courses L26 et L36. Dans ce cas, EV1 est pilotée avec un débit défini (EV1=%), les vérins sont mis en parallèle (EV3=1) et la suspension est verrouillée (EV5=0).
- Le mode F2 « stabilité frontale » et la fonction de contrôle de la stabilité frontale utilisent plusieurs paramètres de la machine pour calculer une donnée de sortie sous forme de pourcentage d'instabilité frontale.

Le pourcentage d'instabilité frontale augmente lorsque les valeurs correspondant à la somme des pressions de fond des deux vérins 26 et 36 et à la somme des pressions de tige des deux vérins 26 et 36 s'écartent de plages prédéterminées pour garantir un niveau de stabilité, qui est corrigé en fonction de l'inclinaison de la structure de la machine équipée du dispositif selon l'invention.

Le mode F3 «stabilité latérale» et la fonction de contrôle de la stabilité latérale sont utilisables, même lorsque la fonction F2 est désactivée lors des manipulations, de manière à apprécier leur comportement de la fonction F2.

Cependant, les deux fonctions sont normalement corrélées pour assurer un contrôle global de la stabilité de la machine.

L'objectif du contrôle de la stabilité latérale n'est pas de corriger ou de contrebalancer un mouvement de basculement commencé, mais de prévenir le basculement en fournissant un appui s'opposant à la tendance au basculement.

La fonction de contrôle de la stabilité latérale ne modifie pas les volumes dans les chambres des vérins hydrauliques 26 et 36 en créant un mouvement, mais simplement s'y oppose en créant une force s'opposant à la tendance au basculement.

La création de cette force résistante au mouvement ne doit pas empêcher l'oscillation libre du pont.

Quel que soit le mode de fonctionnement, on veille systématiquement à maintenir la différence des courses L26 et L36 des vérins hydrauliques 26 et 36 dans une plage donnée, de manière à conserver l'inclinaison du pont par rapport à la machine dans une plage donnée.

Les conditions de blocage d'un vérin dépendent avant tout de la dynamique de rentrée du vérin de l'un ou l'autre des côtés de la machine. Ensuite, c'est l'inclinaison latérale de la machine qui permet la prise de décision :
- si le vérin rentre (sa course diminue) et que la machine s'incline du même côté, on vient bloquer le vérin
- si le vérin rentre (sa course diminue) et que la machine ne s'incline pas, on laisse le système en oscillation libre
- si le vérin rentre (sa course diminue) et que la machine s'incline de l'autre côté, on laisse le système en oscillation libre

A cet effet, on vient modifier les consignes des limiteurs de pression pilotés EV6 et EV7 pour empêcher un vérin de sortir et l'autre de rentrer.

On respecte dans ce pilotage la loi EV6 + EV7 = constante, constante elle-même dépendante de la charge sur l'essieu arrière.

Aucune action d'interruption de la suspension n'est nécessaire (EV5=0) avant toute action sur les pilotages des limiteurs de pression pilotés. L'opposition au basculement est possible en oscillation libre avec ou sans suspension active.

Selon une variante de réalisation non représentée de l'invention, le circuit hydraulique du dispositif selon l'invention comporte un ajout de deux limiteurs de pression sur la ligne hydraulique côté tige des vérins hydrauliques 26 et 36.

En cas de détection de basculement, on viendra alors augmenter la consigne sur limiteur de pression sur la ligne hydraulique côté fond d'un vérin et diminuer la consigne sur limiteur de pression sur la ligne hydraulique côté tige de l'autre vérin.

## Revendications

1. Chariot à pont oscillant, ledit chariot comprenant un dispositif de commande qui comporte :
- des moyens pour déterminer au moins un paramètre physique du chariot, et au moins un paramètre dynamique du chariot,
- des moyens pour améliorer activement la stabilité latérale du chariot, les moyens pour améliorer activement la stabilité latérale du chariot comportant des moyens pour appliquer un couple stabilisant (S) au pont oscillant en s'opposant activement au couple de déséquilibre (D) du chariot,
**caractérisé par le fait que** le chariot est un chariot à bras télescopique, et **par le fait que** lesdits moyens pour déterminer au moins un paramètre physique du chariot comprennent un ensemble de capteurs de valeurs physiques, lesdites valeurs physiques étant les valeurs d'angle d'inclinaison de la flèche, de chargement, de course de télescopage, et d'angles d'inclinaison du chariot,
et **par le fait que** lesdits moyens pour déterminer au moins un paramètre dynamique du chariot comprennent un ensemble de capteurs de valeurs dynamiques, lesdites valeurs dynamiques étant les valeurs d'angles de braquage des roues, de vitesses de braquage de roues, de vitesse d'avancement du chariot, et d'accélération latérale du chariot,
le dispositif comportant au moins un vérin (6) à double effet agissant sur le pont oscillant du chariot pour améliorer activement la stabilité latérale du chariot,
et des moyens de traitement, de calcul et de contrôle comprenant une interface (100) de traitement et de calcul à laquelle lesdits capteurs transmettent lesdites valeurs physiques et dynamiques, ladite interface de traitement et de calcul (100) fournissant, à partir desdites valeurs physiques et dynamiques, un paramètre physique relatif au centre de gravité G du chariot et un paramètre dynamique relatif aux forces appliquées au centre de gravité G du chariot, lesdits moyens de traitement, de calcul et de contrôle agissant sur les actionneurs (6) ou organes du chariot, notamment sur le vérin (6) à double effet, de manière à améliorer activement la stabilité latérale du chariot,
et **par le fait que** ledit au moins un vérin (6) agissant sur le pont oscillant du chariot est commandé par un module (11) comportant un bloc (12) de régulation de pression et un bloc (13) de plusieurs distributeurs (14, 15, 16a, 16b) ayant pour fonctions le blocage du vérin (6), la libre oscillation du vérin (6) et la mise sous pression d'une première chambre (6a) du vérin (6) et la mise sous pression d'une deuxième chambre (6b) du vérin (6).

## Patentansprüche

1. Wagen mit schwingender Brücke, wobei der Wagen eine Steuerung umfasst, die umfasst:
- Mittel zum Bestimmen mindestens eines physischen Parameters des Wagens und mindestens eines dynamischen Parameters des Wagens,
- Mittel zum aktiven Verbessern der seitlichen Stabilität des Wagens, wobei die Mittel zum aktiven Verbessern der seitlichen Stabilität Mittel zum Anwenden eines stabilisierenden Drehmoments (S) auf die schwingende Brücke, indem sie dem Unbalance-Moment (D) des Wagens aktiv entgegenwirken,
**dadurch gekennzeichnet, dass** der Wagen ein Wagen mit Teleskoparm ist, und dass die Mittel zum Bestimmen mindestens eines physischen Parameters des Wagens eine Gruppe von Sensoren für physische Werte umfassen, wobei die physischen Werte des Neigungswinkel des Pfeils, der Ladung, der Teleskopierbahn und Neigungswinkel des Wagens sind, und dass die Mittel zum Bestimmen mindestens eines dynamischen Parameters des Wagens eine Gruppe von Sensoren für dynamische Werte umfassen, wobei die dynamischen Werte die Werte der Lenkwinkel der Räder, der Lenkgeschwindigkeiten der Räder, der Fahrgeschwindigkeit des Wagens und der seitlichen Beschleunigung sind,
wobei die Steuerung umfasst: mindestens einen Doppelwirkungs-Stellmotor (6), der auf die schwingende Brücke des Wagens einwirkt, um die seitliche Stabilität des Wagens aktiv zu verbessern, und Verarbeitungs-, Rechen- und Steuermittel, umfassend eine Verarbeitungs- und Rechenschnittstelle (100), an die die Sensoren die physischen und dynamischen Werte senden, wobei die Schnittstelle (100) anhand der physischen und dynamischen Werte einen physischen Parameter in Bezug auf den Schwerpunkt G des Wagens und einen dynamischen Parameter in Bezug auf die auf den Schwerpunkt G des Wagens angewendeten Kräfte liefert, wobei die Verarbeitungs-, Rechen- und Steuermittel auf die Stellantriebe (6) oder Organe des Wagens, insbesondere auf den Doppelwirkungs-Stellmotor (6) einwirken, um die seitliche Stabilität des Wagens aktiv zu verbessern, und dass der mindestens eine Stellmotor (6), der auf die schwingende Brücke des Wagens einwirkt, durch ein Modul (11) gesteuert wird, das einen Druckreglerblock (12) und einen Block (13) aus mehreren Verteilern (14, 15, 16a, 16b) umfasst, deren Funktionen darin bestehen, den Stellmotor (6) zu blockieren, den Stellmotor (6) frei schwingen zu lassen und eine erste Kammer (6a) des Stellmotors (6) und eine zweite Kammer (6b) des Stellmotors (6) mit Druck zu beaufschlagen.

## Claims

1. A truck with oscillating bridge, said truck comprising a control device that includes:
- means for determining at least one physical parameter of the truck, and at least one dynamic parameter of the truck,
- means for actively improving the lateral stability of the truck, the means for actively improving the lateral stability of the truck including means for applying a stabilizing torque (S) to the oscillating bridge while actively opposing the unbalance couple (D) of the truck,
**characterized in that** the truck is a truck with telescoping arm, and **in that** said means for determining at least one physical parameter of the truck comprise a set of physical value sensors, said physical values being the values of the boom tilt angle, load, telescoping travel, and truck tilt angles,
and **in that** said means for determining at least one dynamic parameter of the truck comprise a set of dynamic value sensors, said dynamic values being the values of the steering angles of the wheels, wheel steering speeds, forward speed of the truck, and lateral acceleration of the truck,
the device including at least one double-acting jack (6) acting on the oscillating bridge of the truck to actively improve the lateral stability of the truck,
and processing, computing and control means comprising a processing and computing interface (100) to which said sensors send said physical and dynamic values, said processing and computing interface (100) supplying, from said physical and dynamic values, a physical parameter relative to the center of gravity G of the truck and a dynamic parameter relative to the forces applied to the center of gravity G of the truck,
said processing, computing and control means acting on the actuators (6) or members of the truck, in particular on the double-acting jack (6), so as to actively improve the lateral stability of the truck,
and **in that** said at least one jack (6) acting on the oscillating bridge of the truck is controlled by a module (11) including a pressure regulating block (12) and a block (13) of several distributors (14, 15, 16a, 16b) having, as functions, the blocking of the jack (6), the free oscillation of the jack (6) and the pressurization of a first chamber (6a) of the jack (6) and the pressurization of a second chamber (6b) of the jack (6).
